# EUROPEAN PATENT APPLICATION

(11) **EP 0 980 848 A2**
(43) Date of publication of application: **23.02.2000**
(21) Application number: 99115922.9
(22) Date of filing: 12.08.1999
(51) Int. Cl.: C03B 33/07

(54) **Method of producing plane glass articles**

(30) Priority: 14.08.1998 IT TO980712
(71) Applicant: BOTTERO S.p.A., 12010 Cuneo (IT)
(72) Inventor: Aimar, Giacomo, 12010 Cervasca (IT); Bisotto, Sebastiano, 12012 Boves (IT)
(74) Representative: Franzolin, Luigi

(57) **Abstract**

A method of producing plane glass articles (2), the method including the steps of forming at least one notch line (17) on a major surface of a sheet (3) of glass; breaking the sheet (3) along the notch line (17) to obtain at least a pair of distinct glass articles (2); and performing at least one additional material-removing operation on at least one major surface (2a) of at least one of the glass articles (2); the additional material-removing operation being performed before the sheet (3) is broken along the notch line (17).

## Description

The present invention relates to a method of producing plane glass articles.

As is known, plane glass articles are formed from large sheets of glass with or without metal and/or plastic surfacing material and/or paint on at least one face of the glass portion of the sheet, or from sheets of laminated glass, which are first notched along given lines defining the respective articles, and are than broken along the notch lines to physically separate the articles from one another.

The articles so formed are then either used directly, i.e. with no further processing, or are processed further to form lettering and/or designs or straightforward holes/cavities on the major surfaces of the articles.

For which purpose, the semifinished articles, once broken off the sheets and normally stored or collected in intermediate storage facilities, are fed successively to one or more work stations, at each of which, each semifinished article is placed in a respective reference position, is retained on a respective supporting table, normally by means of suction cups or suction devices, and undergoes a given material-removing operation to further process one or both major surfaces of the article as required.

Though widely used, the above method of producing plane glass articles involves several drawbacks : storing the articles in intermediate storage facilities, transferring the articles to the various work stations, and positioning and clamping each of the semifinished articles on the respective table call for specially designed fixtures and, even so, involve considerable time and cost, and pose serious difficulties which increase in inverse proportion to the size of the semifinished articles. In particular, in the case of semifinished articles below a given threshold size, the assistance of the operator is required to manually transfer the semifinished articles to the various work stations, and position and clamp the semifinished articles at the respective work stations, thus resulting in a considerable increase in production cost and a considerable fall in the quality standard of the finished articles.

It is an object of the present invention to provide a method of producing plane glass articles, designed to solve the above problems in a straightforward, low-cost manner.

According to the present invention, there is provided a method of producing plane glass articles from a large sheet of glass, the method comprising the steps of forming, on a major surface of said sheet, at least one notch line at least partly defining a pair of said plane glass articles; breaking the sheet along said notch line to obtain at least one pair of distinct plane glass articles; and performing at least one additional material-removing operation on at least one major surface of at least one of the plane glass articles; characterized in that said additional material-removing operation is performed before separating the plane glass articles.

In the method defined above, said additional material-removing operation is preferably performed prior to the breaking step.

Said additional material-removing operation preferably comprises the step of removing at least one portion of the glass material of said sheet of glass.

A non-limiting embodiment of the invention will be described by way of example with reference to the accompanying drawings, in which:
Figure 1 shows a schematic view in perspective of a preferred embodiment of a machine for implementing the method according to the present invention;
Figure 2 shows a section of a variation of a detail in Figure 1.

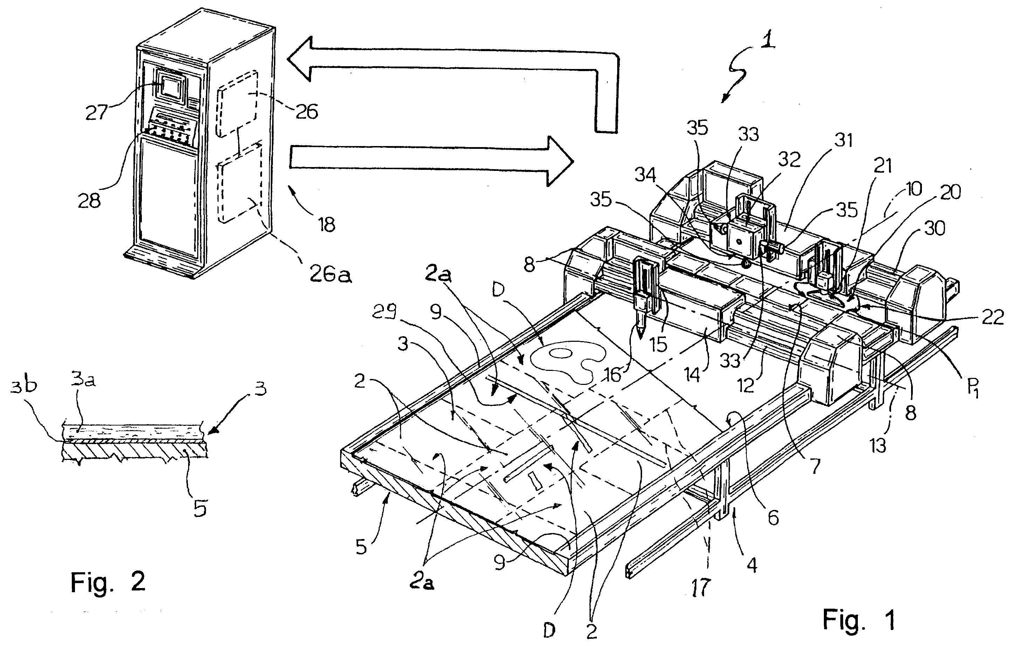

Number 1 in Figure 1 indicates as a whole a machine for producing plane glass articles 2 having respective major surfaces 2a on which are formed, by material removal, lettering, designs, cavities and/or through holes indicated as a whole by D. Articles 2 are formed from an ordinary sheet 3 of glass or from sheets comprising at least one glass portion 3a and at least one layer 3b partially covering portion 3a and made of metal and/or plastic material and/or by depositing paint.

With reference to Figure 1, machine 1 comprises a supporting frame 4; and a board 5 defining a supporting surface 6 for the sheet 3 of glass for processing, and which is connected to frame 4 either in a fixed position or on a swivel for easy loading of sheet 3.

With reference to Figure 1, machine 1 also comprises a known powered cutting bridge 7 which in turn comprises two uprights 8, each connected in sliding manner to a respective straight guide 9 integral with board 5 so as to slide in a longitudinal direction 10, and a cross member 12 extending over supporting surface 6. A powered cutting carriage 14 is fitted to cross member 12 so as to slide in a direction 13 perpendicular to direction 10, and carries a supporting assembly 15 for supporting a known notching tool 16 not described in detail. Machine 1 also comprises a respective electronic control unit 18 for controlling the movement of bridge 7 and carriage 14 in their respective directions, and for moving notching tool 16 along given paths to form a number of notch lines 17, some of which are shown by way of example by the dash lines in Figure 1.

With reference to Figure 1, machine 1 also comprises a tracing station 20 forming at least part of surface 6; and a known tracing device 21 which is movable at station 20, as described later on, to trace a reference path P1 located at station 20. In the example described, reference path P1 is defined by the contour of a two- or three-dimensional pattern 22.

Tracing device 21 is connected directly, by wiring (not shown), to unit 18 which comprises a memory 26 for memorizing in known manner the reference path P1 traced by device 21, and a control assembly - shown schematically and indicated 26a - for controlling and synchronizing bridge 7, carriage 14, and assembly 15.

In actual use, device 21 traces path P1 located at station 20, and supplies path P1 directly to unit 18, which memorizes path P1 in memory 26. At this point, if the traced path P1 is acceptable, by being practically identical to the desired path, unit 18, as a function of path P1, supplies signals to so control bridge 7 and carriage 14 as to move notching tool 16 along a notching path identical to the traced path.

Conversely, if the traced path P1 differs from the desired path, the traced path may be altered by the operator by means of unit 18. For which purpose, unit 18 comprises a display device 27 for displaying the memorized path; and a keyboard 28 by which the machine 1 operator may, e.g. when setting and setting up machine 1, correct and/or alter the memorized traced path P1 to obtain and memorize another desired reference path. At which point, the operator instructs unit 18 to control notching tool 16 as a function of the newly memorized reference path.

Again by means of keyboard 28, the operator may then select one of the paths in memory 26 and control the movement of notching tool 16 according to the selected path.

With reference to Figure 1, machine 1 also comprises a known break-off assembly 29 by which sheet 3 is broken along the previously formed notch lines 17; and a further cutting bridge 30 which, in the example shown, is similar to bridge 7, is connected to board 5 in the same way as bridge 7, and carries a respective powered carriage 31 which slides in a direction parallel to direction 13. In the example described, carriage 31 supports tracing device 21 and a known rotary toolhead 32. Toolhead 32 rotates about an axis substantially parallel to supporting surface 6, and comprises a number of selectively activated spindles 33 and 34, each fitted with a respective cutting tool 35, e.g. a grinding wheel, cutter and/or drill, for performing a material-removing operation on sheet 3; spindles 33 have respective axes of rotation parallel to surface 6, and spindle 34 a respective axis of rotation perpendicular to surface 6.

Bridge 30, carriage 31 and toolhead 32 are also controlled by unit 18 which - again on the basis of paths traced beforehand by device 21 as described previously and memorized in unit 18, or on the basis of instructions entered directly by the operator from keyboard 28 - supplies bridge 30, carriage 31 and toolhead 32 with a number of control signals - independent of those supplied to bridge 7, carriage 14 and assembly 15 supporting notching tool 16 - to perform cutting, grinding and drilling operations on surface 2a of each article 2. More specifically, in actual use, once unit 18 is instructed directly or by means of tracing device 21, notch lines 17 are formed defining the various articles 2, after which, the desired additional operations are performed on surfaces 2a of articles 2 by toolhead 32 removing only glass material, in the case of straightforward glass sheets, and/or various other materials when working with partly surfaced sheets. Once the additional operations are completed, break-off assembly 29 is activated, if sheet 3 is a straightforward glass sheet, and sheet 3 is broken to physically separate the various by now finished articles. In an alternative operating mode, the additional operations are performed on sheet 3 before sheet 3 is notched with lines 17.

Conversely, in the event sheet 3 is laminated and/or coated with a layer of plastic material, the additional operations may be performed, as stated, before or after breaking off portion 3a, but before cutting cover layer 3b, which holds the various articles together in practically fixed positions with respect to one another, even after glass portion 3a is broken off.

As compared with known methods, the method described of producing processed glass articles therefore involves no transfer of the semifinished articles from the break-off station to a storage region and from the storage region to the various operating units, and no individual positioning of the semifinished articles on the operating units. In the method described, in fact, the articles are not separated physically from one another until after the additional operations are completed, so that, throughout additional processing, the various articles are locked permanently to one another in given fixed positions.

The method described therefore provides for considerably reducing cycle time, eliminating the need for specially designed fixtures, and so reducing production cost, while at the same time obtaining articles of consistent quality standard, regardless of the size of the articles.

The tracing device and the notching tool together obviously permit the formation on sheet 3 of notch lines 17 of any shape, and in particular notch lines of particular shapes which cannot be keyboard-entered directly into unit 18, while the tracing device and the rotary toolhead together enable any material-removing operation to be performed on surfaces 2a of articles 2. That is, as for notching tool 16, spindles 33 and 34 may be operated to faithfully reproduce the pattern traced by device 21, or the traced pattern may be altered to obtain another desired pattern which, as stated, may also be memorized and used for controlling different cutting tools.

The method described may obviously be implemented by machines other than machine 1 described by way of example, and in particular by a number of different machines through which the whole sheet 3 is transferred before being fed to a cutting/break-off assembly to physically separate the finished articles 2.

## Claims

1. A method of producing plane glass articles (2) from a large sheet of glass (3), the method comprising the steps of forming, on a major surface of said sheet (3), at least one notch line (17) at least partly defining a pair of said plane glass articles (2); breaking the sheet (3) along said notch line (17) to obtain at least one pair of plane glass articles (2); and performing at least one additional material-removing operation on at least one major surface (2a) of at least one of the plane glass articles (2); characterized in that said additional material-removing operation is performed before separating the plane glass articles (2).

2. A method as claimed in Claim 1, characterized in that said additional material-removing operation is performed prior to the breaking step.

3. A method as claimed in Claim 1 or 2, characterized in that said additional material-removing operation comprises the step of removing at least one portion of the glass material of said sheet (3) of glass.

4. A method as claimed in any one of the foregoing Claims, characterized in that said sheet (3) comprises at least one glass portion (3a) and at least one layer (3b) at least partly covering the glass portion (3a); and in that said additional material-removing operation comprises the step of removing at least one portion of said layer (3b).

5. A method as claimed in any one of the foregoing Claims, characterized in that said additional material-removing operation is performed after the notching step.

6. A method as claimed in any one of Claims 1 to 4, characterized in that said additional material-removing operation is performed before the notching step.

7. A method as claimed in any one of the foregoing Claims, characterized in that said sheet (3) comprises at least one glass portion (3a) and a layer (3b) of material at least partly covering the glass portion (3a); the method comprising the step of cutting said layer (3b), and being characterized in that said additional material-removing operation is performed before cutting said layer (3b).

8. A method as claimed in any one of the foregoing Claims, characterized in that said notching and breaking steps and said additional material-removing operation are all performed without moving said sheet from a work station.
